# EUROPÄISCHE PATENTANMELDUNG

(11) **EP 3 671 138 A1**
(43) Veröffentlichungstag der Anmeldung: **24.06.2020**
(21) Anmeldenummer: 18213424.7
(22) Anmeldetag: 18.12.2018
(51) Int. Cl.: G01F 1/66

(54) **ULTRASCHALL-DURCHFLUSSMENGENMESSER**

(71) Anmelder: Engelmann Sensor GmbH, 69168 Wiesloch-Baiertal (DE)
(72) Erfinder: STUREK, Robert, 69242 Mühlhausen (DE); SCHERBEL, Marius, 69123 Heidelberg (DE); NIEDERMAYER, Manuel, 69231 Rauenberg (DE); ALBERT, Jonas Marian, 74918 Angelbachtal (DE)
(74) Vertreter: Durm Patentanwälte PartG mbB

(57) **Zusammenfassung**

Ein Ultraschall-Durchflussmengenmesser hat ein Messrohr (1), das ein Messkanal (4) begrenzt. Zwei Ultraschallwandler (6, 7) senden und empfangen Ultraschall-Messsignale. Ein erster Umlenkspiegel (10) und ein zweiter Umlenkspiegel (11) sind in unterschiedlichen Höhen in Bezug auf die Achse (5) des Messkanals angeordnet. Der Weg der Ultraschallsignale folgt drei Seiten eines rechtwinkligen Trapezes, wobei die Signalstrecke (19) zwischen den beiden Umlenkspiegeln (10, 11) die Achse (5) des Messkanals (4) unter einem spitzen Winkel schneidet und dadurch der überwiegende Teil des Strömungsquerschnitts schräg durchschallt wird.

## Beschreibung

Die vorliegende Erfindung betrifft einen Ultraschall-Durchflussmengenmesser zur Bestimmung der Menge einer Flüssigkeit, die durch einen Messkanal fließt.

Derartige Durchflussmengenmesser werden insbesondere in Wärmezählern verwendet, um den Verbrauch von Wärme in Heizungsanlagen zu bestimmen. Mittels einer Laufzeitmessung eines Ultraschall-Messsignals das Volumen des Wassers, das durch den Messkanal strömt, präzise gemessen. Gleichzeitig wird im Vorlauf und im Rücklauf die Temperatur des Wassers gemessen. Aus der Temperaturdifferenz und der gemessenen Durchflussmenge lässt sich dann die verbrauchte Wärmemenge berechnen.

Die Erfindung betrifft speziell Ultraschall-Durchflussmengenmesser mit zwei Ultraschallwandlern, die mit Abstand entlang des Messkanals angeordnet sind, und mit zwei zugeordneten Umlenkspiegeln, welche so angeordnet sind, dass die von dem ersten Ultraschallwandler ausgesendeten Ultraschallsignale über den ersten Umlenkspiegel und den zweiten Umlenkspiegel zu dem zweiten Ultraschallwandler reflektiert werden. Die Messstrecke kann auch in umgekehrter Richtung verlaufen, also vom zweiten Ultraschallwandler zum ersten Ultraschallwandler, oder gegenläufig in beiden Richtungen, wenn die Ultraschallwandler sowohl senden als auch empfangen können.

Ein solcher Ultraschall-Durchflussmengenmesser ist beispielsweise durch DE 103 27 076 B3 bekannt. Den beiden Ultraschallwandlern ist jeweils ein Umlenkspiegel zugordnet. Die Messstrecke, also der Weg der Schallsignale, verläuft vom einen Ultraschallwandler zum ersten Umlenkspiegel, von letzterem zum zweiten Umlenkspiegel und von diesem zu dem zweiten Ultraschallwandler und gegenläufig zurück. Die Umlenkspiegel werden jeweils von einem Umlenkspiegelhalter fixiert und sind am Anfang und am Ende der Messstrecke in der Zentralachse des Messkanals, also in der Mitte des Strömungsquerschnitts angeordnet. Die beiden Umlenkspiegel sind jeweils unter 45 Grad schräg zueinander geneigt. Hierdurch ergibt sich eine Messstrecke in U-Form.

Die Anordnung von schrägen Umlenkspiegeln mitten im Strömungsquerschnitt des Messkanals hat Nachteile. Zum einen wird die Strömung zwischen Einlauf und Auslauf des Messrohrs stark gestört. Zum anderen wird das Geschwindigkeitsprofil über den Strömungsquerschnitt, also die unterschiedlichen Strömungsgeschwindigkeiten im Bereich der Innenwandung und im Zentrum des Messrohrs, nicht physisch erfasst, sondern können nur rechnerisch korrigiert werden. Beides führt zu Ungenauigkeiten bei der Volumenmessung.

Das der Erfindung zugrundeliegende technische Problem besteht also darin, einen Ultraschall-Durchflussmengenmesser mit zwei Ultraschallwandlern und nur zwei Umlenkspiegeln so auszugestalten, dass die Flüssigkeitsströmung durch das Messrohr möglichst wenig gestört wird und die Strömungsgeschwindigkeiten über einen möglichst großen Teil des Strömungsquerschnitts tatsächlich gemessen werden können.

Bei der Lösung dieser Aufgabe wird ausgegangen von einem Ultraschall-Durchflussmengenmesser gemäß dem Oberbegriff des ersten Patentanspruchs. Gelöst wird die Aufgabe gemäß dem kennzeichnenden Teil des Anspruchs dadurch, dass die beiden Umlenkspiegel in unterschiedlichen Höhen in Bezug auf die Zentralachse des Messkanals angeordnet sind, sodass der Weg der Ultraschallsignale drei Seiten eines rechtwinkligen Trapezes folgt, wobei die Signalstrecken zwischen den Ultraschallwandlern und den diesen jeweils gegenüberliegenden Umlenkspiegeln senkrecht zur Achse des Messkanals verlaufen und die Signalstrecke zwischen den beiden Umlenkspiegeln die Achse des Messkanals unter einem spitzen Winkel schneidet. Der zwischen den Ultraschallwandlern verlaufende Abschnitt der Innenwandung des Messrohrs bildet dabei die vierte Seite des gedachten Trapezes.

Die beiden Signalstrecken zwischen den Ultraschallwandlern und den diesen gegenüberliegenden Umlenkspiegeln verlaufen parallel zueinander, wohingegen die Signalstrecke zwischen den beiden Umlenkspiegeln schräg gegenüber der Zentralachse des Messkanals verläuft. Damit wird das Geschwindigkeitsprofil zumindest über einen großen Teil des Strömungsquerschnitts des Messkanals durchschallt. Dadurch erhöht sich der Informationsgehalt der Laufzeit- bzw. Laufzeitdifferenzmessung auf der Ultraschall-Messstrecke, sodass das Volumen der strömenden Flüssigkeit genauer erfasst werden kann. Ein weiterer Vorteil ist, dass zumindest einer der beiden schrägen Umlenkspiegel nahe der Innenwandung des Messrohrs, also am Rand des Strömungsquerschnitts angeordnet werden kann, sodass die Strömung vergleichsweise wenig gestört wird.

Optimal wird der überwiegende Teil des Strömungsquerschnitts des Messkanals von den Ultraschallsignalen auf der Signalstrecke zwischen den beiden Umlenkspiegeln schräg durchlaufen. Die Höhendifferenz zwischen Umlenkspiegeln sollte so groß wie möglich sein.

Vorzugsweise ist der erste, das heißt in Durchflussrichtung vordere Umlenkspiegel niedriger angeordnet als der im Bereich des Auslaufs angeordnete zweite Umlenkspiegel. Dadurch ergibt sich eine längere Signalstrecke zwischen dem ersten Ultraschallwandler und dem zugehörigen ersten Umlenkspiegel am Einlauf und der parallelen Signalstrecke zwischen dem zweiten Umlenkspiegel und dem zugehörigen zweiten Ultraschallwandler am Auslauf.

Besonders bevorzugt wird eine Anordnung der Umlenkspiegel derart, dass der erste Umlenkspiegel am Einlauf so nah wie möglich an der Innenwandung oder sogar in einer Vertiefung der Innenwandung des Messrohrs angeordnet ist, wohingegen der zweite Umlenkspiegel am Auslauf mit einigem Abstand von der Innenwandung des Messrohrs angeordnet ist, vorzugsweise nahe des zugehörigen zweiten Ultraschallwandlers.

In vorteilhafter Weiterbildung des erfindungsgemäßen Ultraschall-Durchflussmengenmessers sitzen die Umlenkspiegel auf unterschiedlich hohen Sockeln, welche an der Innenwandung des Messrohrs befestigt sind. Diese Sockel haben vorzugsweise die Form von schräg abgeschnittenen Zylindern, wobei die Schnittflächen die Spiegelflächen der Umlenkspiegel bilden. Die Spiegel selbst haben also vorzugsweise ovale Form. Runde Sockel haben einen kleinen Strömungswiderstand und vermeiden Turbulenzen.

Der Sockel des höher angeordneten zweiten Umlenkspiegels am Auslauf hat bevorzugt eine Durchströmöffnung, welche parallel zur Achse des Messkanals verläuft. Dadurch wird der Strömungswiderstand des Sockels weiter reduziert. Der Körper des Sockels kann auch geringeren Durchmesser als der an der Oberseite angeordnete Umlenkspiegel haben, um den Strömungswiderstand weiter zu reduzieren.

Die Sockel können in Gewindelöcher des Messrohrs eingeschraubt sein. Auch die Ultraschallwandler sitzen bevorzugt in runden Aufnahmen des Messrohrs. Bevorzugt haben diese Aufnahmen für die Ultraschallwandler einen größeren Durchmesser als die Gewindelöcher für die Sockel, wobei die Aufnahmen und die Gewindelöcher miteinander fluchten, das heißt, konzentrisch zueinander angeordnet sind. Dies ermöglicht ein Einsetzen und Einschrauben der Umlenkspiegel mit den Sockeln durch die Aufnahmen für die Ultraschallwandler, bevor die Ultraschallwandler montiert werden.

Das Messrohr ist bevorzugt aus Metall, insbesondere Messing oder Edelstahl. Metall hat die Eigenschaft, Ultraschallwellen stark zu reflektieren, wenn es eine Grenzfläche mit einem anderen Medium mit stark unterschiedlicher Schallkennimpedanz bildet. Insbesondere an Grenzflächen zwischen Metall und Wasser kommt es zu relativ starken Reflexionen. Um solche Reflexionen an der Innenwand des Messrohrs zu verhindern oder jedenfalls zu minimieren, kann das Messrohr innen mit einem Einsatz aus Kunststoff, der Ultraschall gut absorbiert, ausgekleidet werden. Diese Auskleidung kann zum Beispiel in Form eines Kunststoff-Einsatzes ausgebildet sein.

Alternativ kann die Innenwand des Messrohrs zumindest im Bereich zwischen den beiden Ultraschallwandlern eine reliefartige Oberflächenstruktur haben, wobei die Tiefe dieser Oberflächenstruktur größer als die Wellenlänger der Ultraschallsignale ist. Vorzugsweise beträgt die Tiefe der Oberflächenstruktur mindestens das Doppelte der Wellenlänge der Ultraschallsignale. Treffen hochfrequente Ultraschallsignale auf solche Strukturen, die eine Größe haben, die mindestens der Wellenlänge des Ultraschalls entspricht, kommt es zu Vielfachreflexionen bzw. Streuungen. Diese diffus reflektierten Ultraschallwellen stören die Messung vergleichsweise wenig, da ihre Intensität (Amplitude) erheblich geringer ist als die Intensität der gerichteten Ultraschallsignale auf der Messstrecke und somit die Laufzeitmessung kaum stören.

Die streuende Oberflächenstruktur wird vorzugsweise durch eine Vielzahl von parallelen ringförmigen Einstichen oder durch ein Kreuzgewinde gebildet. Ein Gewinde lässt sich leichter einarbeiten als parallele Einstiche.

Im Folgenden werden Ausführungsbeispiele der Erfindung unter Bezugnahme auf die beigefügten Abbildungen beschrieben. Es zeigen:
- Figur 1a, 1b, 1c: einen ersten Ultraschall-Durchflussmengenmesser in Vorderansicht, Vertikalschnitt und Horizontalschnitt;
- Figur 2a, 2b, 2c: einen zweiten Ultraschall-Durchflussmengenmesser in Vorderansicht, Vertikalschnitt und Horizontalschnitt.

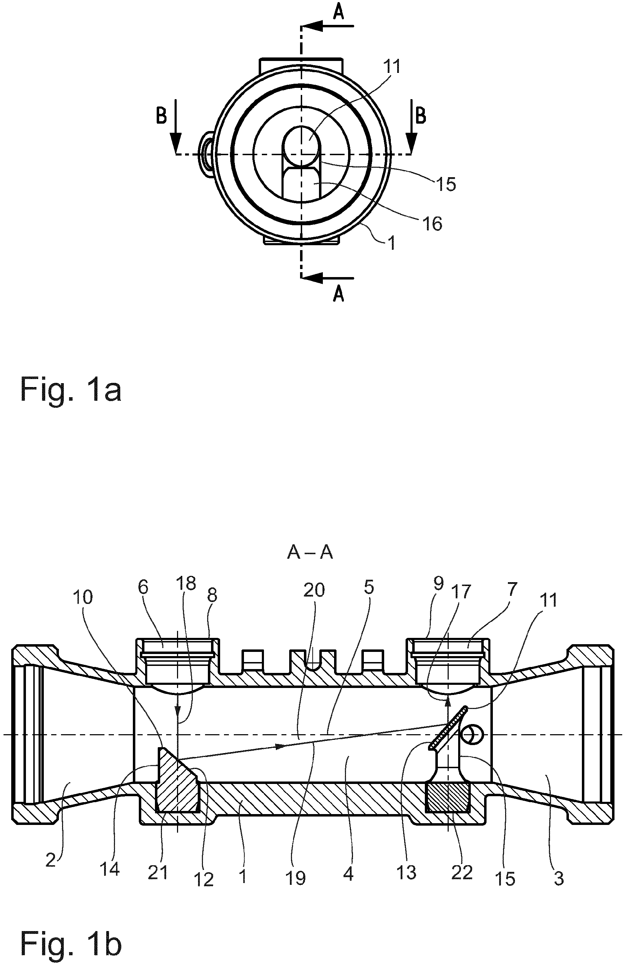

Der in den Figuren 1a - 1c dargestellte Ultraschall-Durchflussmengenmesser hat ein rundes Messrohr 1 aus Messing, welches von kaltem oder warmem Heizungswasser durchströmt wird. Da dieser Durchflussmengenmesser für Heizungsanlagen von größeren Gebäuden vorgesehen ist, hat das Messrohr 1 einen relativ großen Durchmesser von mehreren Zentimetern. An den beiden Enden erweitert sich das Messrohr 1 konisch zu einem Einlauf 2 und einem Auslauf 3, die jeweils mit einem Innengewinde zum Anschluss an die benachbarten Heizungsrohre versehen sind.

Das Messrohr 1 begrenzt einen Messkanal 4 mit konstantem rundem Strömungsquerschnitt. Der Messkanal 4 wird hiervon links nach rechts durchströmt. Die zentrale Achse des Messrohrs 1 fällt mit der Achse 5 des Messkanals 4 zusammen.

Entlang des Messkanals 4 sind ein erster Ultraschallwandler 6 und ein zweiter Ultraschallwandler 7 mit einigem Abstand hintereinander angeordnet. Die beiden Ultraschallwandler 6, 7 sitzen in runden Aufnahmen 8 bzw. 9, die in der Wandung des Messrohrs 1 ausgebildet sind und in welche die Ultraschallwandler 6, 7 von außen einschraubbar sind.

Gegenüber dem ersten Ultraschallwandler 6 ist ein erster Umlenkspiegel 10 im Bereich des Einlaufs 2 angeordnet. Ein zweiter Umlenkspiegel 11 ist gegenüber dem zweiten Ultraschallwandler 7 im Bereich des Auslaufs 3 angeordnet. Die Umlenkspiegel 10, 11 haben zueinander schräg geneigte Spiegelflächen 12 bzw. 13.

Die von dem ersten Ultraschallwandler 6 senkrecht nach unten in den Messkanal 4 ausgesendeten Ultraschallsignale werden über den ersten Umlenkspiegel 10 und den Umlenkspiegel 11 zu dem zweiten Ultraschallwandler 7 reflektiert und gegenläufig zurück zu dem ersten Ultraschallwandler 6.

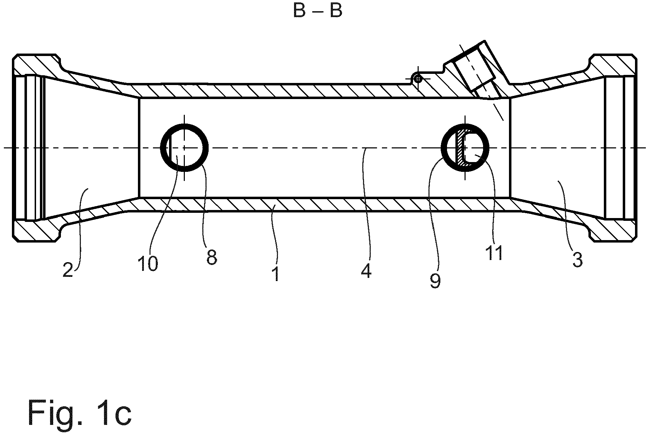

Der erste Umlenkspiegel 10 am Einlauf 2 sitzt auf einem niedrigen Sockel 14. Der zweite Umlenkspiegel 11 sitzt auf einem wesentlich höheren Sockel 15. Die Sockel 14, 15 haben die Form von schräg abgeschnittenen Zylindern, wobei die Schnittflächen die Spiegelflächen 12, 13 bilden, welche dadurch im Wesentlichen ovalen Grundriss haben. Der höhere Sockel 15 des zweiten Umlenkspiegels 11 hat eine Durchströmöffnung 16 (vgl. Fig. 1c).

Die Sockel 14, 15 und damit auch die Umlenkspiegel 10, 11 sind aus Metall (Edelstahl). Die Spiegelflächen 12, 13 sind poliert, sodass die auftreffenden Ultraschallsignale total reflektiert werden.

Dadurch, dass die beiden Umlenkspiegel 10, 11 in unterschiedlichen Höhen in Bezug auf die Achse des Messkanals 4 angeordnet sind, folgt der Weg der Ultraschallsignale drei Seiten eines gedachten rechtwinkligen Trapezes. Dabei verlaufen die Signalstrecken 17 und 18 zwischen den Ultraschallwandlern 6, 7 und den diesen jeweils gegenüberliegenden Umlenkspiegeln 10, 11 senkrecht zur Achse 5 des Messkanals 4, wohingegen die Signalstrecke 19 zwischen den beiden Umlenkspiegeln 10 und 11 die Achse 5 des Messkanals 4 unter einem spitzen Winkel 20 schneidet. Der Winkel 20 beträgt hier ungefähr 15 Grad, kann aber je nach Länge und Durchmesser des Messrohrs 1 auch kleiner oder größer sein. Die Ultraschallsignale auf der Signalstrecke 19 zwischen den beiden Umlenkspiegeln 10, 11 durchlaufen den überwiegenden Teil des Strömungsquerschnitts des Messkanals 4 schräg von unten nach oben, wodurch fast das ganze Geschwindigkeitsprofil des Strömungsquerschnitts durchschallt wird.

Die vierte Seite des gedachten Trapezes stellt die (in Fig. 1b obere) Innenwandung des Messrohrs 1 zwischen den Ultraschallwandlern 6 und 7 dar.

Die Sockel 14, 15 der Umlenkspiegel 10, 11 sind in Gewindelöcher 21, 22 des Messrohrs 1 eingeschraubt, wobei die Aufnahmen 8, 9 für die Ultraschallwandler 6, 7 deutlich größeren Durchmesser als die Gewindelöcher 21, 22 haben und mit den Gewindelöchern 21, 22 fluchten, das heißt, eine gemeinsame Achse haben, die senkrecht zur Achse 5 des Messkanals 4 verläuft. Dadurch ist es möglich, zuerst die Umlenkspiegel 10, 11 durch die noch offenen Aufnahmen 8, 9 hindurch in das Messrohr 1 einzuschrauben und anschließend die Ultraschallwandler 6, 7 zu montieren.

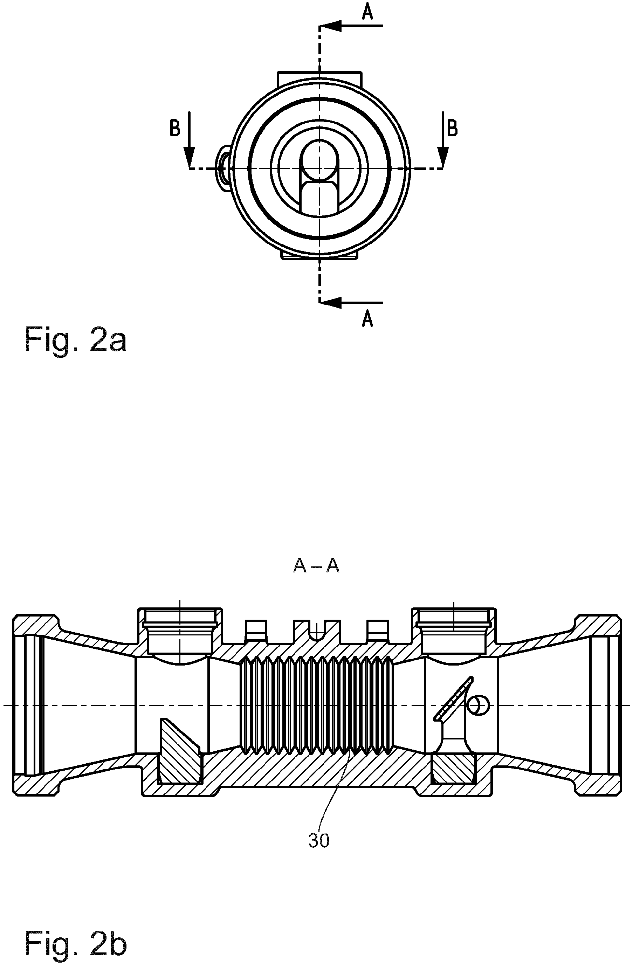

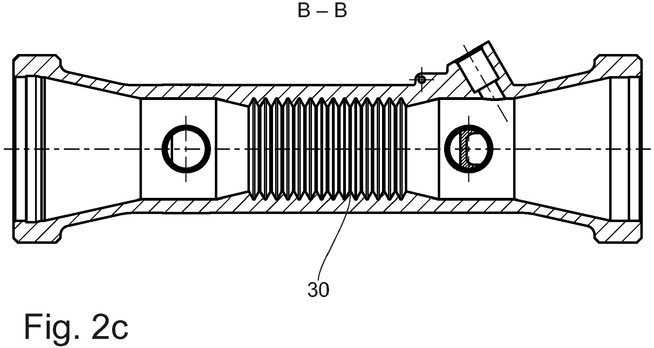

Der in den Figuren 2a - 2c dargestellte Ultraschall-Durchflussmengenmesser entspricht nahezu vollständig dem vorstehend beschriebenen ersten Ausführungsbeispiel. Der einzige Unterschied ist die Ausbildung der Innenwandung des Messrohrs im Bereich des Messkanals, welche hier eine reliefartige Oberflächenstruktur hat, die durch eine Vielzahl von parallelen ringförmigen Einstichen 30 gebildet ist. Die Tiefe dieser Einstiche 30 beträgt ungefähr das doppelte der Wellenlänge der Ultraschallsignale.

### Bezugszeichen

- 1: Messrohr
- 2: Einlauf (Messrohr)
- 3: Auslauf (Messrohr)
- 4: Messkanal
- 5: Achse (Messkanal)
- 6: erster Ultraschallwandler
- 7: zweiter Ultraschallwandler
- 8: Aufnahme (für 6)
- 9: Aufnahme (für 7)
- 10: erster Umlenkspiegel
- 11: zweiter Umlenkspiegel
- 12: Spiegelfläche (von 10)
- 13: Spiegelfläche (von 11)
- 14: Sockel (von 10)
- 15: Sockel (von 11)
- 16: Durchströmöffnung (in 15)
- 17: Signalstrecke (zwischen 6 und 10)
- 18: Signalstrecke (zwischen 7 und 11)
- 19: Signalstrecke (zwischen 10 und 11)
- 20: Winkel (zwischen 5 und 19)
- 21: Gewindeloch (für 14)
- 22: Gewindeloch (für 15)

- 30: Einstiche

## Patentansprüche

1. Ultraschall-Durchflussmengenmesser zur Bestimmung der Menge einer Flüssigkeit, die durch einen Messkanal fließt, mit
einem Messrohr (1), das den Strömungsquerschnitt des Messkanals (4) begrenzt,
zwei Ultraschallwandlern (6, 7), die mit Abstand entlang des Messkanals (4) angeordnet sind und Ultraschallsignale in das Messrohr (1) senden und/oder empfangen,
einem ersten Umlenkspiegel (10), der im Bereich des Einlaufs (2) gegenüber dem ersten Ultraschallwandler (6) angeordnet ist, und einem zweiten Umlenkspiegel (11), der im Bereich des Auslaufs (3) gegenüber dem zweiten Ultraschallwandler angeordnet ist, wobei die beiden Umlenkspiegel (10, 11) zueinander schräg geneigte Spiegelflächen (12, 13) haben, sodass die von dem ersten Ultraschallwandler ausgesendeten Ultraschallsignale über den ersten Umlenkspiegel und den zweiten Umlenkspiegel zu dem zweiten Ultraschallwandler reflektiert werden und/oder gegenläufig zurück zu dem ersten Ultraschallwandler,
**dadurch gekennzeichnet, dass**
die beiden Umlenkspiegel (10, 11) in unterschiedlichen Höhen in Bezug auf die zentrale Achse (5) des Messkanals (4) angeordnet sind, sodass der Weg der Ultraschallsignale drei Seiten eines rechtwinkligen Trapezes folgt, wobei die Signalstrecken zwischen den Ultraschallwandlern (6, 7) und den diesen jeweils gegenüberliegenden Umlenkspiegeln (10, 11) senkrecht zur Achse des Messkanals (4) verlaufen und die Signalstrecke zwischen den beiden Umlenkspiegeln (10, 11) die Achse (5) des Messkanals (4) unter einem spitzen Winkel schneidet.

2. Ultraschall-Durchflussmengenmesser nach Anspruch 1, **dadurch gekennzeichnet, dass** die Ultraschallsignale auf der Signalstrecke zwischen den beiden Umlenkspiegeln (10, 11) den überwiegenden Teil des Strömungsquerschnitts des Messkanals (4) schräg durchlaufen.

3. Ultraschall-Durchflussmengenmesser nach einem der vorhergehenden Ansprüche, **dadurch gekennzeichnet, dass** die Signalstrecke zwischen dem ersten Ultraschallwandler (10) und dem zugehörigen ersten Umlenkspiegel (10) am Einlauf (2) länger ist als die Signalstrecke zwischen dem zweiten Umlenkspiegel (11) am Auslauf (3) und dem zugehörigen zweiten Ultraschallwandler (7).

4. Ultraschall-Durchflussmengenmesser nach einem der vorhergehenden Ansprüche, **dadurch gekennzeichnet, dass** der erste Umlenkspiegel (10) am Einlauf (2) an der Innenwandung des Messrohrs (1) angeordnet ist und der zweite Umlenkspiegel (11) am Auslauf (3) mit einigem Abstand von der Innenwandung des Messrohrs (1) angeordnet ist.

5. Ultraschall-Durchflussmengenmesser nach einem der vorhergehenden Ansprüche, **dadurch gekennzeichnet, dass** die Umlenkspiegel (10, 11) auf unterschiedlich hohen Sockeln (14, 15) sitzen, welche an der Innenwandung des Messrohrs (1) befestigt sind.

6. Ultraschall-Durchflussmengenmesser nach Anspruch 5, **dadurch gekennzeichnet, dass** die Sockel (14, 15) die Form von schräg abgeschnittenen Zylindern haben, wobei die Schnittflächen (12, 13) die Spiegelflächen der Umlenkspiegel (10, 11) bilden.

7. Ultraschall-Durchflussmengenmesser nach Anspruch 5 oder 6, **dadurch gekennzeichnet, dass** der Sockel (15) des zweiten Umlenkspiegels (11) am Auslauf (3) eine Durchströmöffnung (16) hat, welche parallel zur Achse (5) des Messkanals (4) verläuft.

8. Ultraschall-Durchflussmengenmesser nach einem der Ansprüche 5 bis 7, **dadurch gekennzeichnet, dass** die Sockel (14, 15) in Gewindelöchern (21, 22) des Messrohrs (1) eingeschraubt sind.

9. Ultraschall-Durchflussmengenmesser nach Anspruch 8, **dadurch gekennzeichnet, dass** die Ultraschallwandler (6, 7) in runden Aufnahmen (8, 9) des Messrohrs (1) sitzen, wobei diese Aufnahmen mit den Sockeln (14, 15) der zugeordneten Umlenkspiegel (11, 12) fluchten und größeren Durchmesser als die korrespondierenden Gewindelöcher (21, 22) haben.

10. Ultraschall-Durchflussmengenmesser nach einem der vorhergehenden Ansprüche, **dadurch gekennzeichnet, dass** das Messrohr (1) aus Metall ist und seine Innenwand zumindest im Bereich des Messkanals (4) mit einem Ultraschall gut absorbierenden Kunststoff ausgekleidet ist.

11. Ultraschall-Durchflussmengenmesser nach einem der vorhergehenden Ansprüche, **dadurch gekennzeichnet, dass** das Messrohr (1) aus Metall ist und seine Innenwand zumindest im Bereich zwischen den beiden Ultraschallwandlern eine reliefartige Oberflächenstruktur hat, wobei die Tiefe dieser Oberflächenstruktur größer als die Wellenlänge der Ultraschallsignale ist.

12. Ultraschall-Durchflussmengenmesser nach Anspruch 11, **dadurch gekennzeichnet, dass** die Tiefe der Oberflächenstruktur mindestens das Doppelte der Wellenlänge der Ultraschallsignale beträgt.

13. Ultraschall-Durchflussmengenmesser nach Anspruch 11 oder 12, **dadurch gekennzeichnet, dass** die Oberflächenstruktur durch eine Vielzahl von parallelen ringförmigen Einstichen (30) oder durch ein Kreuzgewinde gebildet ist.
